# EUROPEAN PATENT SPECIFICATION

(11) **EP 3 209 476 B1**
(45) Date of publication and mention of the grant of the patent: **18.07.2018**
(21) Application number: 16702477.7
(22) Date of filing: 21.01.2016
(51) Int. Cl.: B29C 45/82, B29C 45/28, B29C 45/27

(54) **PROPORTIONAL CONTROL VALVES MOUNTED IN AN INJECTION MOLDING SYSTEM**
IN EINER SPRITZGIESSMASCHINE MONTIERTE PROPORTIONALE STEUERVENTILE
SOUPAPES DE COMMANDE PROPORTIONNELLES MONTÉES DANS UN SYSTÈME DE MOULAGE PAR INJECTION

(30) Priority: 22.01.2015 US 201562106356 P
(43) Date of publication of application: 30.08.2017
(73) Proprietor: Synventive Molding Solutions, Inc., Peabody, MA 01960 (US)
(72) Inventor: GALATI, Vito, Rowley, MA 01969 (US); TAN, Zhuang, Rui, Pflugerville, TX 78660 (US)
(74) Representative: Fuchs Patentanwälte Partnerschaft mbB
(86) International application number: PCT/US2016/014218
(87) International publication number: WO 2016/118689

(56) References cited:
- US-B1- 6 287 107
- US-B1- 6 554 604

## Description

The present invention relates to an injection molding apparatus.

### BACKGROUND OF THE INVENTION

Injection molding systems having fluid distribution valve systems including proportional control valve systems such as disclosed in U.S. Patent No. 6,287,107 (Kazmer) and U.S. Patent No. 6,554,604 (Schmidt) have been employed in Injection molding systems used in a wide variety of environments and applications where the valve systems including the fluid valves themselves and the fluid manifold that feeds the valve system is mounted outside the hot half space or area of the injection molding systems where the heated fluid distribution hotrunner or manifold is mounted. Such systems as disclosed in international applications PCT/US2011/062099 and PCT/US2011/062096 purposely mount the actuators at an extended distance away from the heated manifold chamber or space within the heated manifold is mounted or disposed in order to protect the integrity of the valves and valve system generally without capability for immediate, fast or quick actuator response in reaction to the supply of drive fluid.

### SUMMARY OF THE INVENTION

In accordance with the invention there is provided an injection molding apparatus (10) comprising:
a heated manifold (16) that receives an injection fluid material (2) from an injection molding machine (4), the heated manifold (16) routing the injection fluid to a fluid delivery channel (18a) that extends and delivers the injection fluid material under an injection pressure to a gate (12g) of a mold cavity (22),
one or more fluid driven actuators (210a, 210b) each interconnected to a corresponding valve pin (211a, 211b) mounted for reciprocal upstream-downstream driven movement (UD) through a flow channel (18a) leading to a downstream terminal gate (12g) that communicates with the mold cavity (22),
a housing comprised of one or more metal plates (202a, 202b, 204a, 204b, 206) arranged to form a manifold chamber (208) bounded by the one or more metal plates within which the heated manifold (16) is mounted,
each of the fluid driven actuators (210a, 210b) being mounted within the manifold chamber (208),
each fluid driven actuator being fluid drive interconnected to a proportional control valve (213a, 213b, 213c), each proportional control valve being mounted either within the manifold chamber (208) or having fluid flow ports (213p1, 213p2) that are interconnected within about one foot of corresponding fluid flow ports (210p1, 210p2) of a corresponding fluid driven actuator (210a, 210b),
each fluid driven actuator (210a, 210b) being interconnected to a source of pressurized fluid (300) via a fluid distribution manifold (310).

The fluid driven actuators are preferably gas driven or pneumatic actuators and the proportional control valves are preferably pneumatic valves and the source of pressurized fluid is preferably a source of pressurized gas.

Each proportional control valve is typically interconnected to a controller (16) that controllably varies the degree of fluid flow between each proportional control valve and a respective interconnected actuator according to a controllable degree of electrical power, voltage, amperage or energy that can be input from the controller to a drive of the proportional control valve.

Each proportional control valve has a mechanically movable member that proportionally varies the degree of fluid flow between a valve and a respective interconnected actuator according to the degree of movement of the mechanically movable member.

Each fluid driven actuator typically has one or more drive chamber ports interconnected to one or more corresponding communication ports of a respective interconnected valve, the distance between a drive chamber port and a corresponding interconnected communication port of an interconnected valve being less than or equal to about one foot.

The fluid distribution manifold (310) can be disposed within the manifold chamber (208).

In another aspect of the invention there is provided a method of performing an injection cycle comprising injecting injection fluid material from an injection molding machine into an injection molding apparatus as described above, the method comprising injecting the injection fluid into the heated manifold and mold cavity and forming a part within the mold cavity.

In another aspect of the invention there is provided a method of performing an injection cycle comprising injecting injection fluid material from an injection molding apparatus (10) comprised of:
a heated manifold (16) that receives an injection fluid material (2) from an injection molding machine (4), the heated manifold (16) routing the injection fluid to a fluid delivery channel (18a) that extends and delivers the injection fluid material under an injection pressure to a gate (12g) of a mold cavity (22),
one or more fluid driven actuators (210a, 210b) each interconnected to a corresponding valve pin (211a, 211b) mounted for reciprocal upstream-downstream driven movement (UD) through a flow channel (18a) leading to a downstream terminal gate (12g) that communicates with the mold cavity (22),
the method comprising:
   mounting the heated manifold within a housing comprised of one or more metal plates (202a, 202b, 204a, 204b, 206) arranged to form a manifold chamber (208) bounded by the one or more metal plates,
      mounting each of the fluid driven actuators (210a, 210b) within or at least about one foot from within the manifold chamber (208),
   each fluid driven actuator being fluid drive interconnected to a proportional control valve (213a, 213b, 213c), each proportional control valve being mounted either within the manifold chamber (208) or having fluid flow ports (213p1, 213p2 ) that are interconnected within about one foot of corresponding fluid flow ports (210p1, 210p2) of a corresponding fluid driven actuator (210a, 210b),
   Interconnecting each fluid driven actuator (210a, 210b) to a source of pressurized fluid (300) via a fluid distribution manifold (310), and
   injecting the injection fluid into the heated manifold and mold cavity and forming a part within the mold cavity.

### Brief Description of the Drawings

The above and further advantages of the invention may be better understood by referring to the following description in conjunction with the accompanying drawings in which:
Fig. 1 is a schematic cross-sectional view of one embodiment of an arrangement of proportional directional control valves and associated actuators all disposed within an enclosed space or chamber in which a heated manifold is disposed where the fluid distribution manifold that feeds the valves is disposed outside the manifold chamber.
Fig. 1A is a schematic side cross-sectional view an embodiment of the invention similar to the embodiment of Fig. 1 where the fluid distribution manifold is also disposed within the chamber.

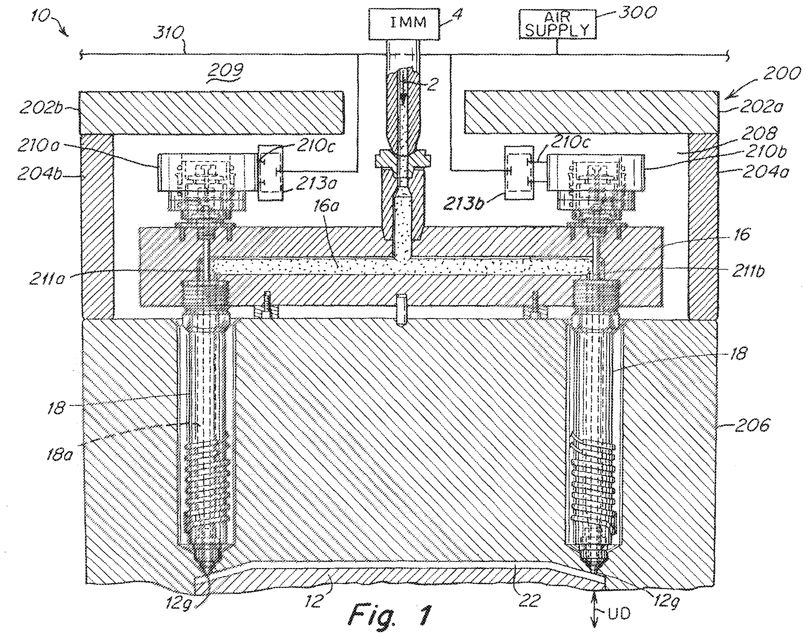

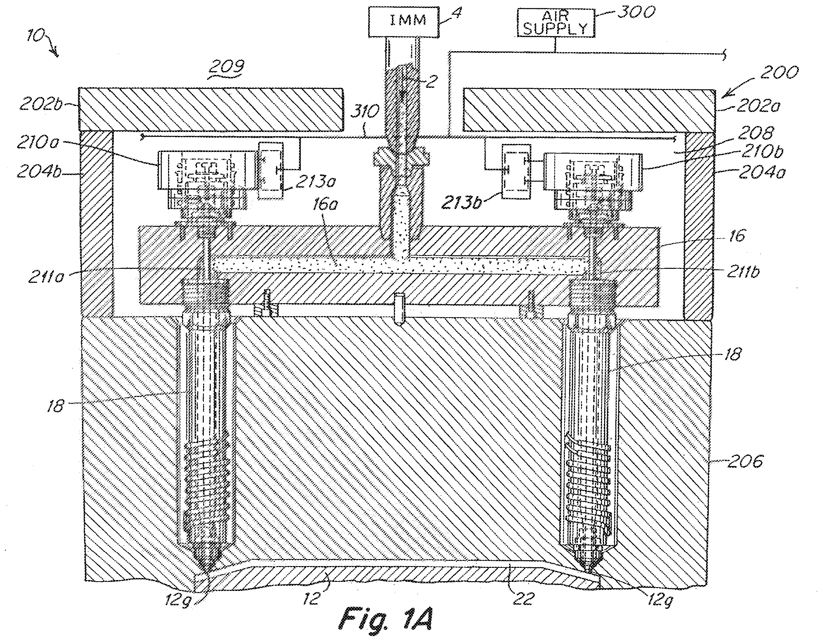

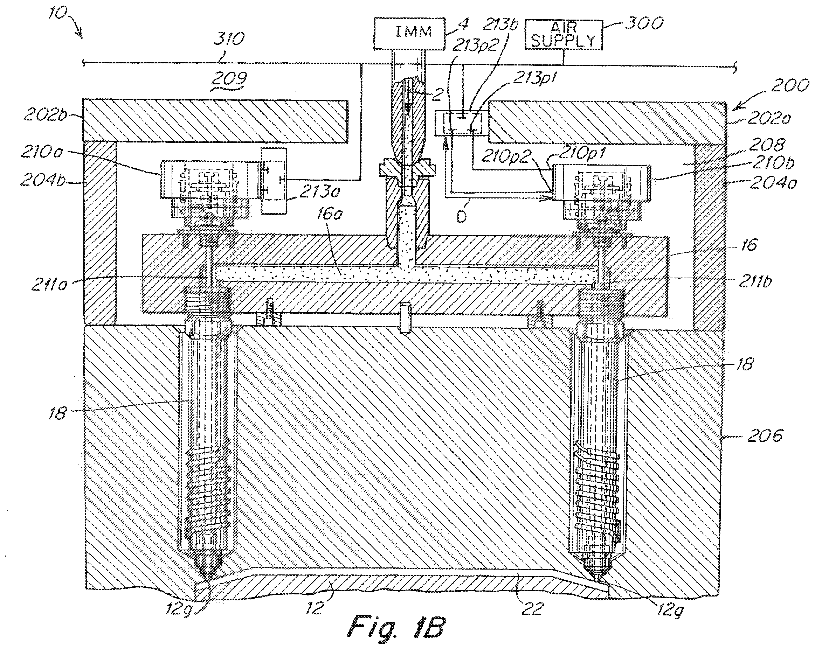

Fig. 1B is a schematic side cross-sectional view an embodiment of the invention similar to the embodiments of Figs. 1, 1B where one of the actuators of the system is disposed outside the fully enclosed space of the manifold chamber, which goes beyond the scope of the description, but still disposed within about one foot of its associated actuator such that the reaction time of the piston of the actuator to pressurized fluid exiting an output port of the valve is immediate without any substantial delay in movement when the valve port is opened to communication with the drive chamber of the actuator.
Fig. 2 is a schematic cross-sectional view of an embodiment, which partially goes beyond the scope of the invention, showing an actuator that is disposed in an extension space of the manifold chamber and alternatively mounted valves, one valve mounted fully within the manifold chamber and an alternative valve mounted within about one foot of the actuator to which it is alternatively interconnected..
Fig. 3 is a schematic representation of a typical prior art arrangement of proportional control valves disposed outside the manifold chamber and interconnected more than about one foot away from their corresponding interconnected actuators that are disposed within the manifold chamber.
Fig. 4 is a schematic representation of a multiplicity of proportional control valves disposed within the manifold chamber that are both mounted on and interconnected to their corresponding actuators that are also disposed within the manifold chamber.
Fig. 5 is a schematic representation of the invention where a multiplicity of proportional control valves is disposed within the manifold chamber together with their corresponding actuators, the valves being not mounted on the actuators and the fluid distribution manifold mounted outside the manifold chamber.
Fig. 6 is a schematic representation of the invention similar to Fig. 5 except that the fluid distribution manifold is mounted within the manifold chamber.

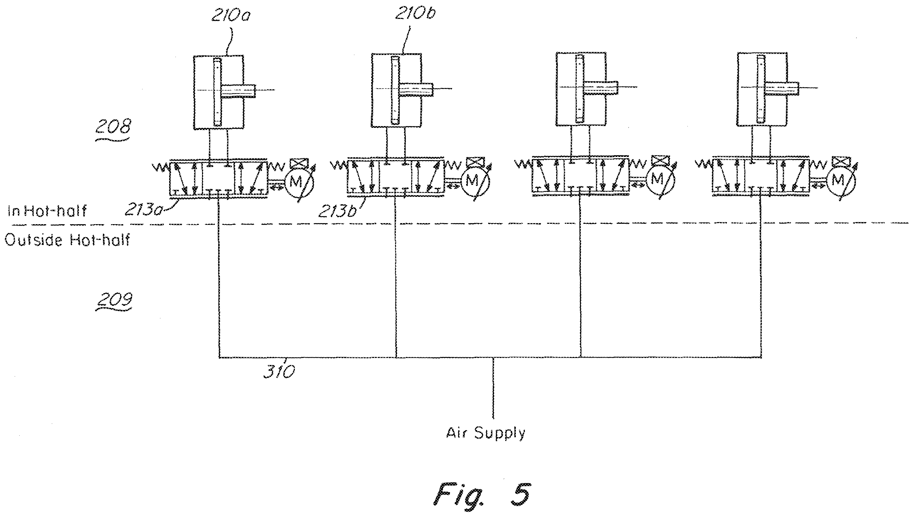

Fig. 5C is a side sectional view of the Fig. 5A components showing the valve pin disposed at a gate closed downstream position at the end of an injection cycle.

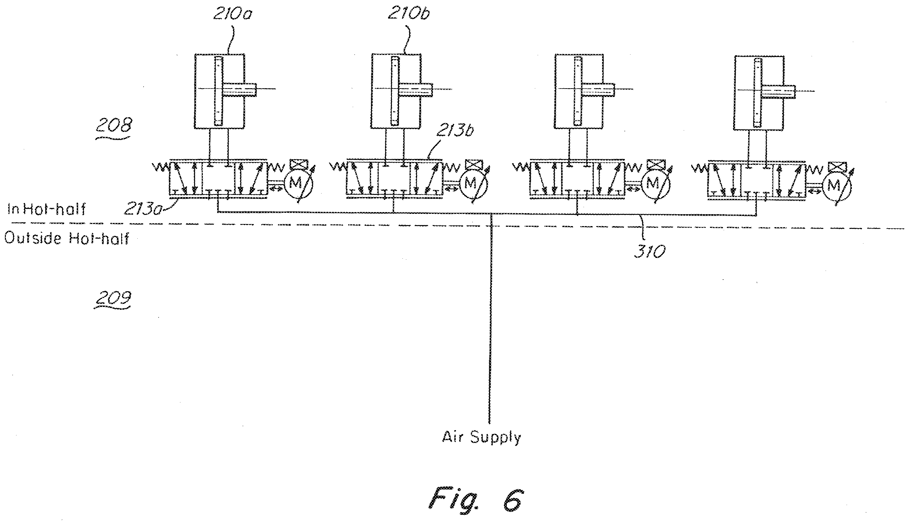

Fig. 6 is an exemplary plot of a drop in injection fluid pressure located within the nozzle of a valve having a configuration as shown in Figs. 5A-5C versus position of the valve pin, the zero position of the valve pin being the position shown in Fig. 5A.

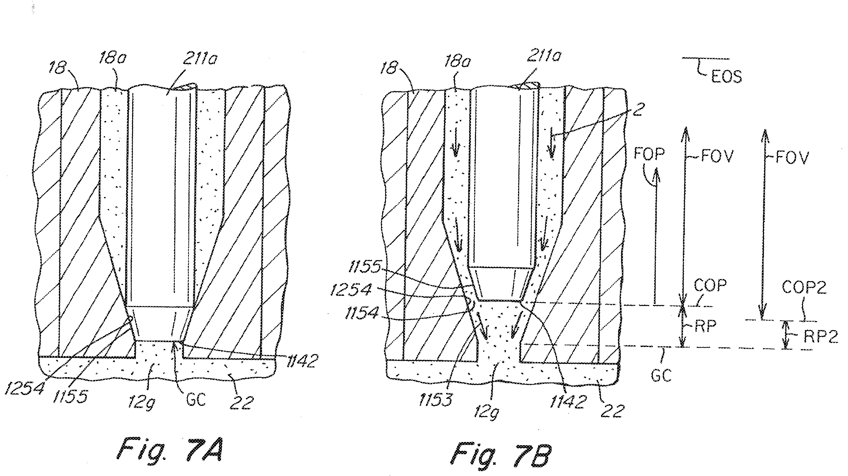

Figs. 7A and 7B show tapered end valve pin positions at various times and positions between a starting closed position as in Fig. 7A and various upstream opened positions, RP representing a selectable path length over which the velocity of withdrawal of the pin upstream from the gate closed position to an open position is reduced (via a controllable flow restrictor) relative to the velocity of upstream movement that the valve pin would normally have over the uncontrolled velocity path FOV when the hydraulic pressure.

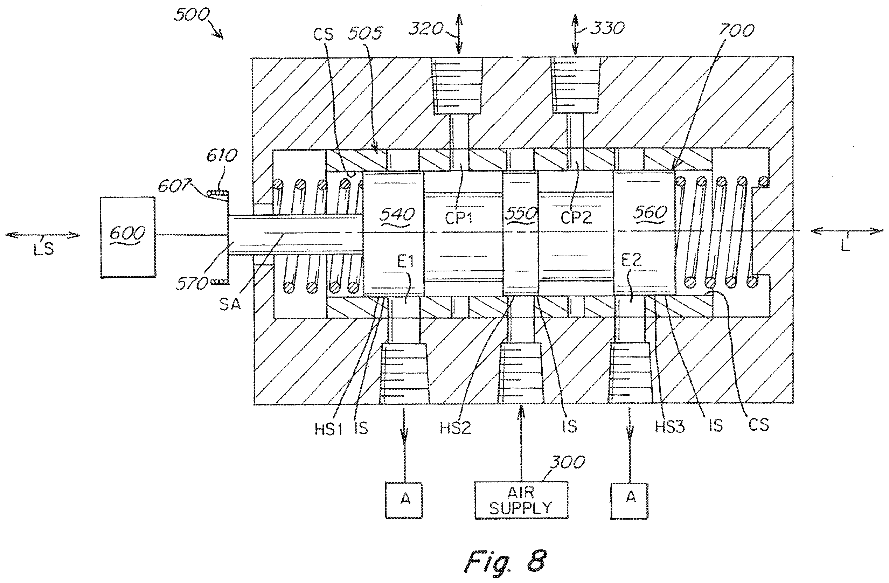

Fig. 8 is a side cross-sectional schematic view of a typical pneumatic valve assembly that can be used as a high precision pneumatic proportion flow control valve in the Figs. 1 - 6 injection system embodiments.

### Detailed Description

Figs. 1, 1A, 1B show an injection molding apparatus 10 comprised of a heated manifold 16 that receives an injection fluid material 2 from an injection molding machine 4, the heated manifold 16 having fluid distribution channels 16a that route the injection fluid 2 to one or more fluid delivery channels 18a that extend and deliver the injection fluid material 2 under an injection pressure to a gate 12g of a mold 12 cavity 22. The apparatus includes a housing 200 that is comprised of one or more metal plates including top clamp plate(s) 202a, 202b, spacer or mounting plates 204a, 204b and mounting plate 206 that collectively are arranged to form an enclosed manifold chamber 208 bounded by the one or more metal plates 202a, 202b, 204a, 204b, 206 within which the heated manifold 16 is mounted. The apparatus includes one or more fluid driven actuators 210a, 210b each interconnected to a corresponding valve pin 211a, 211b mounted for reciprocal upstream-downstream UD driven movement through a downstream nozzle 18 flow channel 18a leading to a downstream terminal gate 12g that communicates with the mold 12 cavity 22. Each of the fluid driven actuators 210a, 210b is mounted completely within or within at least about one foot from within the manifold chamber 208.

Each fluid driven actuator 210a, 210b is fluid sealably drive interconnected via tubing or some other sealed port to port connection 210c to a proportional control valve 213a, 213b, each proportional control valve being mounted either completely within the manifold chamber 208 or within about one foot of a respective fluid driven actuator 210a, 210b to which the proportional control valve 213a, 213b is interconnected. Each fluid driven actuator 210a, 210b is interconnected to a source of pressurized fluid 300 via a fluid distribution manifold 310.

A "proportional control valve" as used herein means gas or other fluid flow control valve that is interconnected to a source of pressurized fluid that has a mechanical moving member that varies the rate of flow of fluid that flows out of the valve proportionally according to the degree or rate of movement of the mechanical member. The mechanical member can be controllably movable a selected degree of movement (rotational or linear travel) via an electrically powered drive that is controllably variable according to a controllably applied degree of current, voltage, amperage, resistance or the like as described below in one example of a proportional valve shown and described with reference to Fig. 8.

The valve pins 18a, 18b are interconnected to a corresponding actuator 210a, 210b and have a tip end 1142 drivable along a drive path that extends between a first position GC where the tip end 1142 of the valve pin 18a obstructs the first gate 12g to prevent the injection fluid 2 material from flowing into the cavity 22, a second position COP, COP2 upstream of the first position GC wherein the tip end 1142 of the valve pin 211a, 211b restricts flow of the injection fluid 2 through the gate 12g along at least a portion RP, RP2 of the length of the drive path extending between the first position GC and the second position COP, COP2, and a third position EOS upstream of the second position where the injection fluid material 2 flows freely through the gate 12g without restriction from the tip end 1142 of the pin 211a, 211b. The one or more actuators 210a, 210b and corresponding valve pins 211a, 211b are translationally driven at a controllable rate of travel by a corresponding proportional control valve 213a, 213b which is controllably adjustable between a start position, one or more intermediate drive rate positions and a high drive rate position, the one or more actuators 210a, 210b being driven upstream at one or more intermediate rates of travel when a corresponding proportional control valve 213a, 213b is in the one or more intermediate drive rate positions and at a higher rate of travel than the one or more intermediate rates of travel when the corresponding proportional control valve 210a, 210b is in the high drive rate position.

The apparatus can include a controller 16 that instructs one or more of the proportional control valves 213a, 213b, 213c to drive the one or more fluid driven actuators 210a, 210b and corresponding valve pins continuously upstream from the start position GC to the second position COP, COP2 to the third position EOS. The controller includes instructions that instruct the proportional control valves to move from their start positions to the one or more intermediate drive rate positions and subsequently from their one or more intermediate drive rate positions to the high drive rate position either on receipt by the controller 16 of a signal from a position sensor 400 that is indicative of the valve pin having reached the second position COP, COP2 or upon elapse of a predetermined amount of time from the time that the valve pin 211a, 211b was first withdrawn upstream from its initial start position GC.

As shown in Figs. 1, 1A, 1B, 2, 4-6, the apparatus includes a manifold 16 which is heated to an elevated temperature typically above 300 degree F. The manifold 16 is typically mounted on a stationary platen of an injection molding machine together with its associated hotrunner components that can include a top clamp plate 202a, 202b, spacer or mounting plates 204a, 204b and one or more other downstream disposed mounting or mold plates such as plate 206. The collective arrangement of these metal plates 202a, 202b, 204a, 204b, 206 is typically configured so that the exceptionally hot manifold or hotrunner16 is enclosed between these plates within an enclosed or partially enclosed chamber 208 of air that is heated by the heat generated by the metal manifold 16. The fluid supply 300 is mounted remotely outside and away from 209 the heated space of the enclosed chamber 208 such that the space 209 is not significantly heated by conductive air contact with the manifold 16 or the air space 208 bounded by the plates 202a, 202b, 204a, 204b, 206.

As shown the actuators 210a, 210b et al. are typically mounted on (Figs. 1, 1A, 1B) or in immediate adjacency to the heated manifold 16 such that the actuators are also disposed either completely or substantially partially within the chamber 208 formed by the plates.

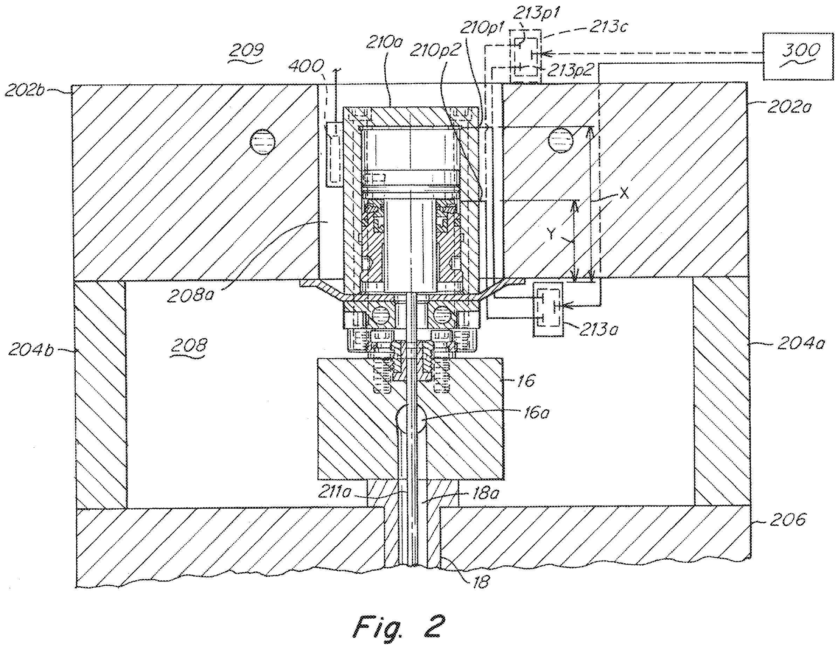

The proportional control valves 213a, 213b, 213c are also mounted either completely within the air space of the chamber 208 or within at least about one foot D, Fig. 1B or X, Y, Fig. 2 of a corresponding interconnected actuator 210a, 210b that is mounted within a chamber 208.

In the example of Fig. 2, actuator 210a is mounted within an extension space 208a of chamber 208 that is formed by a recess or groove provided in the top clamping plate(s) 202a, 202b.

Thus Figs. 1, 1A, 1B, 2, 4, 5 and 6 all depict various arrangements where the proportional control valves are either mounted or disposed within the manifold chamber 208 or are disposed within at least about one foot of the actuators to which they are fluid connected, the actuators themselves being disposed within the enclosed heated manifold chamber 208

Each fluid driven actuator 210a, 210b preferably has one or more drive chamber ports 210p1, 210p2 interconnected to one or more corresponding communication ports 213p1, 213p2 of a respective interconnected valve (for example valve 213b, Fig. 1B), the distance D, Fig. 1B (or distance X, Y, Fig. 2) between a drive chamber port 210p1, 210p2 and a corresponding interconnected communication port 213p1, 213p2 of an interconnected valve 213a, 213b, 213c being less than or equal to about one foot in distance D, Fig. 1B (or X, Y, Fig. 2). Thus, although a valve such as 213b as shown in Fig. 1B or 213c in Fig. 2 is not completely disposed or mounted within the heated manifold chamber 208, the valve can be mounted such that its fluid port 213p1, 213p2 is fluid connected and disposed about one foot or less away from the associated connected port 210p1, 210p2 of an actuator.

Figs. 7A-7B show tapered end valve pin positions at various times and positions between a starting closed position as in Fig. 7A and various upstream opened positions, RP representing a selectable path length over which the velocity of withdrawal of the pin upstream from the gate closed position to an open position is reduced (via a controllable flow restrictor) relative to the velocity of upstream movement that the valve pin would normally have over the uncontrolled velocity path FOV when the hydraulic pressure.

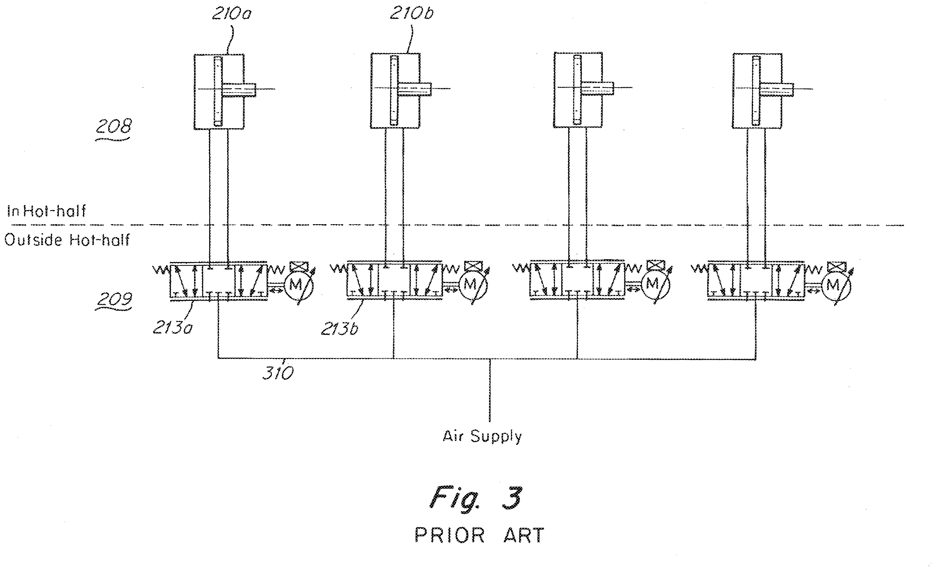

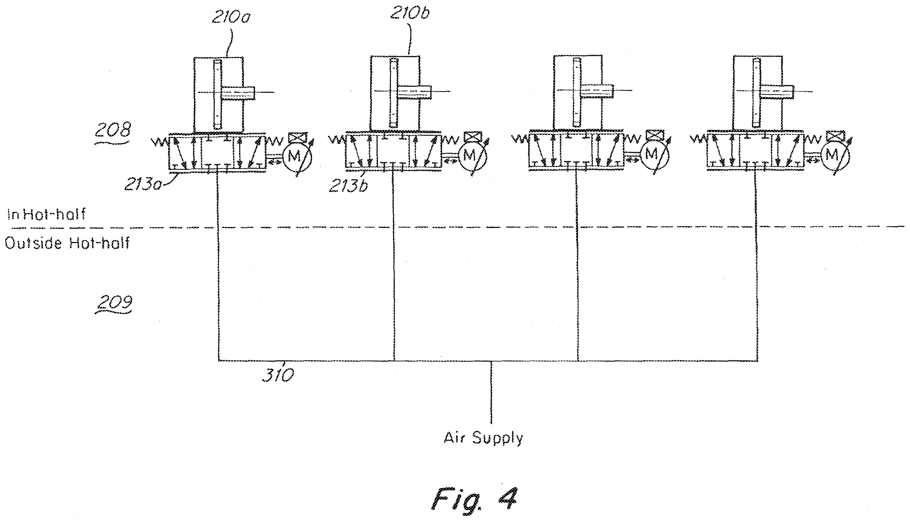

Preferably, the valve pin and the gate are configured or adapted to cooperate with each other to restrict and vary the rate of flow of fluid material 1153, Figs. 3A-3B, 4A-4B over the course of travel of the tip end of the valve pin through the restricted velocity path RP. Most typically as shown in Figs. 3A, 3B the radial tip end surface 1155 of the end 1142 of pin 1041, 1042 is conical or tapered and the surface of the gate 1254 with which pin surface 1155 is intended to mate to close the gate 34 is complementary in conical or taper configuration. Alternatively as shown in Figs. 4A, 4B, the radial surface 1155 of the tip end 1142 of the pin 1041, 1042 can be cylindrical in configuration and the gate can have a complementary cylindrical surface 1254 with which the tip end surface 1155 mates to close the gate 34 when the pin 1041 is in the downstream gate closed position. In any embodiment, the outside radial surface 1155 of the tip end 1142 of the pin 1041 creates restricted a restricted flow channel 1154 over the length of travel of the tip end 1142 through and along restricted flow path RP that restricts or reduces the volume or rate of flow of fluid material 1153 relative to the rate of flow when the pin 1041, 1042 is at a full gate open position, namely when the tip end 1142 of the pin 1041 has travelled to or beyond the length of the restricted flow path RP (which is, for example the 4 mm upstream travel position of Figs 5A-5C).

In one embodiment, as the tip end 1142 of the pin 1041 continues to travel upstream from the gate closed GC position (as shown for example in Figs. 3A, 4A) through the length of the RP path (namely the path travelled for the predetermined amount of time), the rate of material fluid flow 1153 through restriction gap 1154 through the gate 34 into the cavity 30 continues to increase from 0 at gate closed GC position to a maximum flow rate when the tip end 1142 of the pin reaches a position FOP (full open position), Figs. 5A-5D, where the pin is no longer restricting flow of injection mold material through the gate. In such an embodiment, at the expiration of the predetermined amount of time when the pin tip 1142 reaches the FOP (full open) position Figs. 5A, 5B, the pin 1041 is immediately driven by the hydraulic system at maximum velocity FOV (full open velocity) typically such that the restriction valve 600 is opened to full 100% open.

In alternative embodiments, when the predetermined time for driving the pin at reduced velocity has expired and the tip 1142 has reached the end of restricted flow path RP2, the tip 1142 may not necessarily be in a position where the fluid flow 1153 is not still being restricted. In such alternative embodiments, the fluid flow 1153 can still be restricted to less than maximum flow when the pin has reached the changeover position COP2 where the pin 1041 is driven at a higher, typically maximum, upstream velocity FOV. In the alternative examples shown in the Figs. 3B, 4B examples, when the pin has travelled the predetermined path length at reduced velocity and the tip end 1142 has reached the changeover point COP, the tip end 1142 of the pin 1041 (and its radial surface 1155) no longer restricts the rate of flow of fluid material 1153 through the gap 1154 because the gap 1154 has increased to a size that no longer restricts fluid flow 1153 below the maximum flow rate of material 1153. Thus in one of the examples shown in Fig. 3B the maximum fluid flow rate for injection material 1153 is reached at the upstream position COP of the tip end 1142. In another example shown in Fig. 3B 4B, the pin 1041 can be driven at a reduced velocity over a shorter path RP2 that is less than the entire length of the restricted mold material flow path RP and switched over at the end COP2 of the shorter restricted path RP2 to a higher or maximum velocity FOV. In the Figs. 5A, 5B examples, the upstream FOP position is about 4mm and 5mm respectively upstream from the gate closed position. Other alternative upstream FOP positions are shown in Figs. 5C, 5D.

In another alternative embodiment, shown in Fig. 4B, the pin 1041 can be driven and instructed to be driven at reduced or less than maximum velocity over a longer path length RP3 having an upstream portion UR where the flow of injection fluid mold material is not restricted but flows at a maximum rate through the gate 34 for the given injection mold system. In this Fig. 4B example the velocity or drive rate of the pin 1041 is not changed over until the tip end of the pin 1041 or actuator 941 has reached the changeover position COP3. As in other embodiments, a position sensor senses either that the valve pin 1041 or an associated component has travelled the path length RP3 or reached the end COP3 of the selected path length and the controller receives and processes such information and instructs the drive system to drive the pin 1041 at a higher, typically maximum velocity upstream. In another alternative embodiment, the pin 1041 can be driven at reduced or less than maximum velocity throughout the entirety of the travel path of the pin during an injection cycle from the gate closed position GC up to the end-of-stroke EOS position, the controller 16 being programmed to instruct the drive system for the actuator to be driven at one or more reduced velocities for the time or path length of an entire closed GC to fully open EOS cycle.

In the Figs. 5A-5D examples, FOV is 100 mm/sec. Typically, when the time period for driving the pin 1041 at reduced velocity has expired and the pin tip 1142 has reached the position COP, COP2, the restriction valve 600 is opened to full 100% open velocity FOV position such that the pins 1041, 1042 are driven at the maximum velocity or rate of travel that the hydraulic system is capable of driving the actuators 941, 942. Alternatively, the pins 1041, 1042 can be driven at a preselected FOV velocity that is less than the maximum velocity at which the pin is capable of being driven when the restriction valve 600 is fully open but is still greater than the selected reduced velocities that the pin is driven over the course of the RP, RP2 path to the COP, COP2 position.

At the expiration of the predetermined reduced velocity drive time, the pins 1041, 1042 are typically driven further upstream past the COP, COP2 position to a maximum end-of-stroke EOS position. The upstream COP, COP2 position is downstream of the maximum upstream end-of-stroke EOS open position of the tip end 1142 of the pin. The length of the path RP or RP2 is typically between about 2 and about 8 mm, more typically between about 2 and about 6 mm and most typically between about 2 and about 4 mm. In practice the maximum upstream (end of stroke) open position EOS of the pin 1041, 1042 ranges from about 8 mm to about 18 inches upstream from the closed gate position GC.

The controller 16 includes a processor, memory, user interface and circuitry and/or instructions that receive and execute the user inputs of percentage of maximum valve open or percentage of maximum voltage or current input to the motor drive for opening and closing the restriction valve, time duration for driving the valve pin at the selected valve openings and reduced velocities.

Fig. 8 shows one embodiment of a proportional control valve 500 that can be used as a proportional control valve 213a, 213b, 213c in the examples described above. In Fig. 8, the valve assembly 500 includes a spool 700 having heads 540, 550, 560 with respective outer circumferential head surfaces HS1, HS2, HS3. The respective interior interface surfaces CS of the cylinder 505 are machined to close tolerances so as to form a micro gap at the interfaces IS between the head surfaces HS1, HS2, HS3 of each head and the adjacent opposing surface of the interior wall surface CS of the cylinder 505 in the range of 1 to 10 micrometers, thereby avoiding the need for the use of a separate fluid seal, such as a polymeric layer of material, at or between the interfaces IS of such surfaces. Such avoidance of the use of separate fluid seals at the interfaces IS reduces friction at the interfaces and enables the spool 700 to respond more quickly to force that is applied by drive mechanism 600, 610 that drives the spool to travel laterally A on energization of the drive mechanism 610.

The Fig. 8 valve operates in the same manner as the valve shown and described in U.S. Patent No. 5,960,831. The spool 700 is driven by an electromagnet 600 and associated pole member that interacts electromagnetically with the coils 610 mounted on the end 570 of the spool to translationally drive the spool A. The spool 700 is drivable laterally and translationally without any friction generating engagement with or interconnection to another object such as would be generated if the spool 700 were interconnected to a movable mechanical object such as the shaft of a motor, or a joint, bushing, screw, bolt, ball bearing, support bearing or other drive mechanism, the spool 700 being slidably supported for driven lateral movement LS within the cylinder 505 solely via engagement of surfaces HS1, HS2 and HS3 with the interior wall surfaces CS of the cylinder 505.

As shown in Figure 8, the valve assembly 500 comprises a spool valve member 700 comprised of and configured in the form of a distal axial projection 570, heads 540, 550, 560, recesses disposed between the heads and a sealed cylinder 505. The spool valve member 700 is slidably drivable within the interior of the cylinder 505, the interior wall surface CS of the cylinder 505 being formed to have a diameter essentially the same as the outside diameter of the outer circumferential surfaces HS1, HS2, HS3 of the heads 540, 550, 560 respectively. The outside surfaces HS1, HS2, HS3 of the heads 540, 550, 560 are integral with each other such that there is no other material disposed between the heads 540, 550, 560 and the interfaces of surfaces HS1, HS2, HS3 and the interior wall surface CS of the cylinder 505 to form a seal against flow of pressurized gas along or through the interfaces.

The spool valve member 700 is drivable LS laterally back and forth L along its axis SA and depending on the precise lateral position L of the member 700. The precise lateral L position of the heads 540, 550, 560 relative to the flow ports or apertures CP1, CP2 in the cylinder housing 504, 505 determines the direction and degree of flow of pressurized gas back and forth 200, 300 to and from the gas drive chambers of the actuators 210a, 210b.. Further depending on the precise lateral L positioning of the spool valve member 700 pressurized gas will vent or evacuate through one of two vents E1, E2 to an ambient reservoir of gas A such as an ambient atmosphere or a tank of ambient air or other gas.

The spool valve member 700 is driven laterally back and forth LS at predetermined rates and to predetermined lateral positions by the interaction of an electromagnetically energizable coil 610 with a magnetic field generator 600. As shown the coils 610 are fixedly mounted via a bracket 607 on or to the terminal end 570 of spool 700. The coils are typically extend and are mounted circumferentially around spool shaft member 570. The mount 607 is adapted to position the coils 610 to generate a field in a spatial proximity and arrangement relative to the field generated by magnet 600 such that a force is generated by and between the field generated by coil 610 when energized and the field generated by magnet 600 to cause the spool that is fixedly interconnected to coil 610 via mount 607 to be controllably driven LS laterally L as shown in Fig. 3. The coils 610 are interconnected via an electrically conductive wire (not shown) to an external source of power input that is typically included and mounted together with the controller 16 as described herein. An electromagnetic field is controllably generated by the coils 610 by controlled input of electrical energy or power from the remotely interconnected power source. Such electromagnetic interaction between magnetic field generator or magnet 600 and the electromagnetic field generated within coils 610 causes the spool 700 to be controllably laterally L moved LS to precise predetermined lateral positions at predetermined rates via the controller 16, the precise lateral positioning of the heads 540, 550, 560 relative to the flow ports CP1, CP2 in the cylinder housing 504, 505 determining the direction and velocity of drive of the actuator 80, 20' and valve pin 45, 1041.

The spool valve member 700 is preferably mounted on, to and supported within cylinder 505 solely and primarily by mounting engagement or contact between surfaces HS1, HS2, HS3 of the spool member 700 with the complementary interior surfaces CS of cylinder 505. As such, the coils 610 move laterally LS together with movement of the valve member 570, 700 without drag or friction other than the sliding engagement between the outer surfaces HS1, HS2, HS3 and interior cylinder surface CS. In a typical embodiment the drive mechanism 600, 610 comprises an electrically conductive coil 610 mounted on or to projection 570. A permanent magnet and associated pole piece 600 is mounted for generation of a field within or near the axial center of the coil 610 to cause the coil 610 to move laterally when an electric current is applied to the coil 610 in the manner described in the above-referenced U.S. Patent no. 5,960,831 incorporated by reference herein in its entirety. The mounting and support of the spool 570, 700 solely within and on the valve cylinder 505 reduces the amount of friction or drag that would otherwise be exerted on spool 570, 700 if the spool were mechanically interconnected or mounted to another mechanism such as on bearings or via a universal joint to a rotating motor shaft. Similarly the mounting of the drive mechanism 610 on the projection 570 of spool itself rather than a mechanical interconnection of the spool 570, 700 to a drive mechanism reduces the amount of friction or drag that might otherwise be exerted on the spool 570, 700 by such an interconnection. Most preferably therefore, the operative valve member 700 is mounted for lateral movement between its operative fluid flow positions within cylinder 505 solely by the member's 700 acting as its own bearing for lateral and any other rotational or translational movement between operative positions. The physical interconnection of the coils 610 to the power source via a wire or other power transfer mechanism does not create any significant mechanical drag on, frictional resistance to or engagement with the spool 700 or the driven translational movement of the spool 700 within the cylinder 505.

The preferred pneumatic valve 500 can also be adapted to implement a hydraulic or pressurized liquid system where the supply of pressurized fluid is oil, water or another hydraulic fluid. Such a hydraulic valve assembly 500 can be used in conjunction with a hydraulic actuator having liquid drive chambers analogous to gas drive chambers to construct and use the systems and methods described above in the same manner as described regarding pneumatic systems.

Proportional control valves are well suited for circuits that need to vary either flow or pressure to reduce lunge and shock. The solenoids typically employed with these valves shift a spool more or less, according to the voltage applied to proportional solenoids. They can change the speed at which the spool shifts or the distance that it travels. Because the spool in a proportional valve does not shift all the way, all at once, proportional control valves can control the acceleration and deceleration of an actuator. Usually, varying shifting time of the spool controls acceleration and deceleration. Varying voltage to the coil limits spool travel to control the maximum speed of an actuator. A computer, a PC, a programmable logic controller, or even a simple rheostat can produce the variable electric signal.

Direct-operated valves are smaller and less expensive than solenoid-pilot valves. However, solenoid-pilot proportional control valves can handle higher flows, some in excess of 200 gpm.

A simple proportional control valve such as shown in Fig. 9A typically uses and depends on solenoid force working against a spring to position the spool. Because flow, pressure, temperature, and fluid cleanliness change constantly, a given selected proportional input voltage (or current or power) may not always produce the same spool position. To resolve spool position accuracy, a linear variable differential transformer (LVDT) as shown in Fig. 9A can be employed to electronically compare the input signal with spool position and modify voltage (or current or power) to provide the same spool position regardless of system changes. An LVDT adds cost to the valve and the electronics, but can be preferred in all but simple acceleration/deceleration circuits.

Direct solenoid-operated proportional valves with LVDT do not typically enable repeatability of flow through the valve because flow is a function of pressure drop and fluid viscosity as well as orifice size. Changes in pressure or fluid thickness will modify actuator speed. To reduce speed change, add a feedback signal from the actuator (similar to a servovalve circuit). Actuator feedback will help but is still not extremely accurate because most proportional valves do not respond quickly enough to overcome sudden system changes.

Fig. 9C illustrates a direct solenoid-operated proportional valve with LVDT and pressure compensator that can be used in the present invention. As shown, a pressure-compensating valve (pressure compensator) in the inlet line reduces flow fluctuations due to system pressure changes. The pressure compensator maintains a constant pressure drop across the spool orifice to keep flow constant when inlet or working pressures change. The pressure compensator is a reducing valve that has a fixed spring setting (for example 150 psi). A shuttle valve provides pressure feedback from each cylinder port to the reducing valve's remote-control port. As pressure in a working port changes, it modifies reducing-valve pressure to maintain a constant 150-psi drop across the proportional valve's spool.

Fig. 9D illustrates a proportional relief valves that can be used as a valve in the present invention. Using electrical signals to a proportional solenoid to vary the force against a poppet or orifice allows infinitely variable control of pressure. The illustrations of Fig. 9D show symbols for infinitely variable pressure-relief and reducing valves. Use a PC or PLC to produce the variable signal to change pressure any time a machine sequence requires it. Remote control of a pressure-compensated pump with a proportional pressure valve makes these pumps more versatile also.

## Claims

1. An injection molding apparatus (10) comprising:
a heated manifold (16) that receives an injection fluid material (2) from an injection molding machine (4), the heated manifold (16) routing the injection fluid to a fluid delivery channel (18a) that extends and delivers the injection fluid material under an injection pressure to a gate (12g) of a mold cavity (22),
one or more fluid driven actuators (210a, 210b) each interconnected to a corresponding valve pin (211a, 211b) mounted for reciprocal upstream-downstream driven movement (UD) through a flow channel (18a) leading to a downstream terminal gate (12g) that communicates with the mold cavity (22),
a housing comprised of one or more metal plates (202a, 202b, 204a, 204b, 206) arranged to form a manifold chamber (208) bounded by the one or more metal plates within which the heated manifold (16) is mounted, wherein each of the fluid driven actuators (210a, 210b) is mounted within the manifold chamber (208),
each fluid driven actuator is fluid drive interconnected to a proportional control valve (213a, 213b, 213c), each proportional control valve is mounted within the manifold chamber (208),
each fluid driven actuator (210a, 210b) is interconnected to a source of pressurized fluid (300) via a fluid distribution manifold (310).

2. The apparatus of claim 1 wherein the fluid driven actuators are gas driven or pneumatic actuators and the proportional control valves are pneumatic valves and the source of pressurized fluid is a source of pressurized gas.

3. An apparatus according to each of the preceding claims wherein each proportional control valve is interconnected to a controller (16) that controllably varies the degree of fluid flow between each proportional control valve and a respective interconnected actuator according to a controllable degree of electrical power, voltage, amperage or energy that can be input from the controller to a drive of the proportional control valve.

4. An apparatus according to each of the preceding claims wherein each proportional control valve has a mechanically movable member that proportionally varies the degree of fluid flow between a valve and a respective interconnected actuator according to the degree of movement of the mechanically movable member.

5. An apparatus according to each of the preceding claims wherein each fluid driven actuator has one or more drive chamber ports interconnected to one or more corresponding communication ports of a respective interconnected valve

6. An apparatus according to each of the preceding claims wherein the fluid distribution manifold (310) is disposed within the manifold chamber (208).

7. Use of an injection molding apparatus according to each of the preceding claims for performing a method comprising injecting the injection fluid into the heated manifold and mold cavity and forming a part within the mold cavity.

8. A method of performing an injection cycle comprising injecting injection fluid material from an injection molding apparatus (10) comprised of:
a heated manifold (16) that receives an injection fluid material (2) from an injection molding machine (4), the heated manifold (16) routing the injection fluid to a fluid delivery channel (18a) that extends and delivers the injection fluid material under an injection pressure to a gate (12g) of a mold cavity (22),
one or more fluid driven actuators (210a, 210b) each interconnected to a corresponding valve pin (211a, 211b) mounted for reciprocal upstream-downstream driven movement (UD) through a flow channel (18a) leading to a downstream terminal gate (12g) that communicates with the mold cavity (22), whereas the method comprises
mounting the heated manifold within a housing comprised of one or more metal plates (202a, 202b, 204a, 204b, 206) arranged to form a manifold chamber (208) bounded by the one or more metal plates,
mounting each of the fluid driven actuators (210a, 210b) within the manifold chamber (208),
each fluid driven actuator being fluid drive interconnected to a proportional control valve (213a, 213b, 213c), each proportional control valve being mounted within the manifold chamber (208),
Interconnecting each fluid driven actuator (210a, 210b) to a source of pressurized fluid (300) via a fluid distribution manifold (310), and
injecting the injection fluid into the heated manifold and mold cavity and forming a part within the mold cavity.

## Patentansprüche

1. Spritzgießvorrichtung (10), mit:
einem geheizten Verteiler (16), der ein Spritzgießfluidmaterial (2) von einer Spritzgussmaschine (4) empfängt, wobei der geheizte Verteiler (16) das Spritzgießfluid zu einem Fluidzufuhrkanal (18a) weiterleitet, der sich zu einem Angusskanal (12g) eines Formhohlraums (22) erstreckt und das Spritzgießfluidmaterial dem Angusskanal unter einem Einspritzdruck zuführt;
einem oder mehreren fluidbetriebenen Aktuatoren (210a, 210b), die jeweils mit einem entsprechenden Ventilstift (211a, 211b) verbunden sind, der für eine hin- und hergehende angetriebene stromaufwärts-/stromabwärtsseitige Bewegung (UD) durch einen Strömungskanal (18a) montiert ist, der zu einem mit dem Formhohlraum (22) kommunizierenden stromabwärtsseitigen Endangusskanal (12g) führt;
einem Gehäuse, das aus einer oder mehreren Metallplatten (202a, 202b, 204a, 204b, 206) besteht, die derart angeordnet sind, dass sie eine Verteilerkammer (208) bilden, die durch die eine oder die mehreren Metallplatten begrenzt ist und in der der geheizte Verteiler (16) montiert ist,
wobei jeder der fluidbetriebenen Aktuatoren (210a, 210b) innerhalb der Verteilerkammer (208) montiert ist,
jeder fluidbetriebene Aktuator fluidantriebsmäßig mit einem Proportionalregelventil (213a, 213b, 213c) verbunden ist, wobei jedes Proportionalregelventil innerhalb der Verteilerkammer (208) montiert ist, und
wobei jeder fluidbetriebene Aktuator (210a, 210b) über eine Fluidverteilerleitung (310) mit einer Druckfluidquelle (300) verbunden ist.

2. Vorrichtung nach Anspruch 1, wobei die fluidbetriebenen Aktuatoren gasbetriebene oder pneumatische Aktuatoren sind und die Proportionalregelventile pneumatische Ventile sind und die Druckfluidquelle eine Druckgasquelle ist.

3. Vorrichtung nach einem der vorangehenden Ansprüche, wobei jedes Proportionalregelventil mit einer Steuereinheit (16) verbunden ist, die die Fluiddurchflussrate zwischen jedem Proportionalregelventil und einem jeweiligen verbundenen Aktuator gemäß einem steuerbaren Grad an elektrischer Leistung, Spannung, Stromstärke oder Energie regelbar ändert, die von der Steuereinheit einem Steuerport des Proportionalregelventils zugeführt werden kann.

4. Vorrichtung nach einem der vorangehenden Ansprüche, wobei jedes Proportionalregelventil ein mechanisch bewegbares Element aufweist, das die Fluiddurchflussrate zwischen einem Ventil und einem jeweiligen verbundenen Aktuator entsprechend dem Grad der Bewegung des mechanisch bewegbaren Elements proportional ändert.

5. Vorrichtung nach einem der vorangehenden Ansprüche, wobei jeder fluidbetriebene Aktuator einen oder mehrere Antriebskammerports aufweist, die mit einem oder mehreren entsprechenden Kommunikationsports eines jeweiligen verbundenen Ventils verbunden sind

6. Vorrichtung nach einem der vorangehenden Ansprüche, wobei die Fluidverteilerleitung (310) innerhalb der Verteilerkammer (208) angeordnet ist.

7. Verwendung einer Spritzgießvorrichtung nach einem der vorangehenden Ansprüche zum Ausführen eines Verfahrens mit den Schritten zum Einspritzen des Spritzgießfluids in den geheizten Verteiler und in den Formhohlraum und zum Ausbilden eines Teils innerhalb des Formhohlraums.

8. Verfahren zum Ausführen eines Spritzgießzyklus, mit dem Einspritzen eines Spritzgießfluidmaterials von einer Spritzgießvorrichtung (10), die aufweist:
einen geheizten Verteiler (16), der ein Spritzgießfluidmaterial (2) von einer Spritzgießmaschine (4) empfängt, wobei der geheizte Verteiler (16) das Spritzgießfluid zu einem Fluidzufuhrkanal (18a) weiterleitet, der sich zu einem Angusskanal (12g) eines Formhohlraums (22) erstreckt und das Spritzgießfluidmaterial dem Angusskanal unter einem Einspritzdruck zuführt;
einen oder mehrere fluidbetriebene Aktuatoren (210a, 210b), die jeweils mit einem entsprechenden Ventilstift (211a, 211b) verbunden sind, der für eine hin- und hergehende angetriebene stromaufwärts-/stromabwärtsseitige Bewegung (UD) durch einen Strömungskanal (18a) montiert ist, der zu einem mit dem Formhohlraum (22) kommunizierenden stromabwärtsseitigen Endangusskanal (12g) führt,
wobei das Verfahren die Schritte aufweist:
Montieren des geheizten Verteilers in einem Gehäuse, das aus einer oder mehreren Metallplatten (202a, 202b, 204a, 204b, 206) besteht, die derart angeordnet sind, dass sie eine Verteilerkammer (208) bilden, die durch die eine oder die mehreren Metallplatten begrenzt ist;
Montieren jedes der fluidbetriebenen Aktuatoren (210a, 210b) innerhalb der Verteilerkammer (208),
wobei jeder fluidbetriebene Aktuator fluidantriebsmäßig mit einem Proportionalregelventil (213a, 213b, 213c) verbunden ist, wobei jedes Proportionalregelventil innerhalb der Verteilerkammer (208) montiert ist;
Verbinden jedes fluidbetriebenen Aktuators (210a, 210b) mit einer Druckfluidquelle (300) über eine Fluidverteilerleitung (310); und
Einspritzen des Spritzgießfluids in den geheizten Verteiler und in den Formhohlraum und Ausbilden eines Teils innerhalb des Formhohlraums.

## Revendications

1. Appareil de moulage par injection (10) comprenant :
un collecteur chauffé (16) qui reçoit un matériau de fluide d'injection (2) en provenance d'une machine de moulage par injection (4), le collecteur chauffé (16) acheminant le fluide d'injection jusqu'à un canal de délivrance de fluide (18a) qui s'étend et délivre le matériau de fluide d'injection sous une pression d'injection jusqu'à une porte (12g) d'une cavité de moule (22) ;
un ou plusieurs actionneur(s) entraîné(s) par fluide (210a, 210b) dont chacun est interconnecté avec une tige de soupape correspondante (211a, 211b) qui est montée de manière à ce qu'elle effectue un mouvement entraîné vers le haut-vers le bas (UD) en va-et-vient au travers d'un canal d'écoulement (18a) qui débouche sur une porte terminale aval (12g) qui communique avec la cavité de moule (22) ;
un logement qui est constitué par une ou plusieurs plaque(s) métallique(s) (202a, 202b, 204a, 204b, 206) qui est/sont agencée(s) de manière à ce qu'elle(s) forme(nt) une chambre de collecteur (208) qui est délimitée par les une ou plusieurs plaques métalliques, chambre de collecteur à l'intérieur de laquelle le collecteur chauffé (16) est monté ; dans lequel :
chacun des actionneurs entraînés par fluide (210a, 210b) est monté à l'intérieur de la chambre de collecteur (208) ;
chaque actionneur entraîné par fluide est interconnecté en termes d'entraînement par fluide avec une soupape de commande proportionnelle (213a, 213b, 213c), chaque soupape de commande proportionnelle est montée à l'intérieur de la chambre de collecteur (208) ;
chaque actionneur entraîné par fluide (210a, 210b) est interconnecté avec une source de fluide sous pression (300) via un collecteur de distribution de fluide (310).

2. Appareil selon la revendication 1, dans lequel les actionneurs entraînés par fluide sont des actionneurs entraînés par gaz ou pneumatiques et les soupapes de commande proportionnelle sont des soupapes pneumatiques et la source de fluide sous pression est une source de gaz sous pression.

3. Appareil selon chacune des revendications qui précèdent, dans lequel chaque soupape de commande proportionnelle est interconnectée avec un contrôleur (16) qui fait varier de façon commandable le degré d'écoulement de fluide entre chaque soupape de commande proportionnelle et un actionneur interconnecté respectif conformément à un degré commandable de puissance électrique, de tension, d'ampérage ou d'énergie qui peut être entré depuis le contrôleur sur un moyen d'entraînement de la soupape de commande proportionnelle.

4. Appareil selon chacune des revendications qui précèdent, dans lequel chaque soupape de commande proportionnelle comporte un élément mobile mécaniquement qui fait varier de façon proportionnelle le degré d'écoulement de fluide entre une soupape et un actionneur interconnecté respectif conformément au degré de déplacement de l'élément mobile mécaniquement.

5. Appareil selon chacune des revendications qui précèdent, dans lequel chaque actionneur entraîné par fluide comporte un ou plusieurs orifice(s) de chambre d'entraînement qui est/sont interconnecté(s) avec un ou plusieurs orifice(s) de communication correspondant(s) d'une soupape interconnectée respective.

6. Appareil selon chacune des revendications qui précèdent, dans lequel le collecteur de distribution de fluide (310) est disposé à l'intérieur de la chambre de collecteur (208).

7. Utilisation d'un appareil de moulage par injection selon chacune des revendications qui précèdent pour réaliser un procédé qui comprend l'injection du fluide d'injection à l'intérieur du collecteur chauffé et de la cavité de moule et la formation d'une pièce à l'intérieur de la cavité de moule.

8. Procédé de réalisation d'un cycle d'injection comprenant l'injection d'un matériau de fluide d'injection depuis un appareil de moulage par injection (10) qui est constitué par :
un collecteur chauffé (16) qui reçoit un matériau de fluide d'injection (2) en provenance d'une machine de moulage par injection (4), le collecteur chauffé (16) acheminant le fluide d'injection jusqu'à un canal de délivrance de fluide (18a) qui s'étend et délivre le matériau de fluide d'injection sous une pression d'injection jusqu'à une porte (12g) d'une cavité de moule (22) ;
un ou plusieurs actionneur(s) entraîné(s) par fluide (210a, 210b) dont chacun est interconnecté avec une tige de soupape correspondante (211a, 211b) qui est montée de manière à ce qu'elle effectue un mouvement entraîné vers le haut-vers le bas (UD) en va-et-vient au travers d'un canal d'écoulement (18a) qui débouche sur une porte terminale aval (12g) qui communique avec la cavité de moule (22) ;
tandis que le procédé comprend :
le montage du collecteur chauffé à l'intérieur d'un logement qui est constitué par une ou plusieurs plaque(s) métallique(s) (202a, 202b, 204a, 204b, 206) qui est/sont agencée(s) de manière à ce qu'elle(s) forme(nt) une chambre de collecteur (208) qui est délimitée par les une ou plusieurs plaques métalliques ;
le montage de chacun des actionneurs entraînés par fluide (210a, 210b) à l'intérieur de la chambre de collecteur (208) ;
chaque actionneur entraîné par fluide étant interconnecté en termes d'entraînement par fluide avec une soupape de commande proportionnelle (213a, 213b, 213c), chaque soupape de commande proportionnelle étant montée à l'intérieur de la chambre de collecteur (208) ;
l'interconnexion de chaque actionneur entraîné par fluide (210a, 210b) avec une source de fluide sous pression (300) via un collecteur de distribution de fluide (310) ; et
l'injection du fluide d'injection à l'intérieur du collecteur chauffé et de la cavité de moule et la formation d'une pièce à l'intérieur de la cavité de moule.
